# EUROPÄISCHE PATENTSCHRIFT

(11) **EP 2 208 549 B1**
(45) Veröffentlichungstag und Bekanntmachung des Hinweises auf die Patenterteilung: **12.10.2011**
(21) Anmeldenummer: 09000615.6
(22) Anmeldetag: 16.01.2009
(51) Int. Cl.: B21D 7/024, B21F 1/00

(54) **Rotationszugbiegewerkzeug mit Exzenterklemmung**
Rotation stretch bending tool with eccentric clamp
Outil de cintrage rotatif à traction avec bridage excentrique

(43) Veröffentlichungstag der Anmeldung: 21.07.2010
(73) Patentinhaber: WAFIOS Aktiengesellschaft, 72764 Reutlingen (DE)
(72) Erfinder: Wolf, Jürgen, 72141 Walddorfhäslach (DE)
(74) Vertreter: Geyer, Fehners & Partner

(56) Entgegenhaltungen:
- EP-A- 0 374 110
- WO-A-2007/122346
- GB-A- 1 319 581
- US-A- 2 667 202
- US-A- 2 702 065

## Beschreibung

Die Erfindung bezieht sich auf ein Rotationszugbiegewerkzeug mit Exzenterklemmung zum Biegen länglicher Werkstücke, wie Rohre, Drähte, Profilstränge oder dgl., mit einem verdrenbaren Biegedorn, einem diesem zugeordneten und relativ zu ihm beweglichen Klemmbacken, der von einer vom Biegedorn entfernten Offenstellung, in der ein zu biegendes Werkstück zwischen Biegedom und Klemmbacken einführbar ist, in eine Klemmstellung am Biegedom bzw. umgekehrt verbringbar und dabei um eine zur Drehachse des Biegedornes exzentrisch versetzte Schwenkachse frei verdrehbar ist, wobei der Klemmbacken zwischen seiner Klemmstellung und seiner Offenstellung durch Verdrehen der Drehscheibe relativ zum Biegedom verfahrbar ist.

Aus der EP 1 591 174 B1 ist ein Rohrbiegewerkzeug bekannt, bei dem der Biegekopf über insgesamt drei Drehachsen betätigt wird. Dabei dreht ein erster Drehantrieb den Biegedorn selbst, ein zweiter Drehantrieb den Biegearm mit dem darauf angebrachten Klemmbacken, und über einen dritten Antrieb wird schließlich eine Kurvenscheibe verdreht, in der ein Führungselement läuft, welches mit dem Klemmbacken verbunden ist und diesen beim Verdrehen radial verfährt. Diese bekannt Konstruktion ist jedoch infolge der vielen mechanischen Elemente, mit denen der Biegearm versehen ist, relativ aufwendig und teuer. Zudem liegt bei ihr infolge einer großen Störkontur eine Einschränkung des Biegefreiraums vor.

Die EP 1 543 892 B1 beschreibt eine Biegevorrichtung, bei welcher der Klemmbacken auf einer Zahnstange sitzt, die über ein an der Biegeachse angebrachtes Zahnrad verfahrbar ist. Um die radiale Zustellung des Klemmbackens zum Biegedorn hin zu bewirken, muß der Biegeantrieb betätigt werden, der nach erfolgter Zustellung und Verklemmung dann die Verschwenkung des Biegedornes zusammen mit dem Klemmbacken bewirkt. Hier muß allerdings zunächst die Biegeachse so lange durch Betätigung des Biegeantriebs gedreht werden, bis die Zustellbewegung des Klemmbackens erfolgt und das Werkstück zwischen Klemmbacken und Biegedom verklemmt ist. Erst hiernach wird gebogen. Dabei muß der Biegedom vollständig rund ausgeführt sein, wobei ein Rechts- und ein Linksbiegen nicht ohne weiteres möglich sind.

Bei der EP 1 543 891 A1 sitzen die Klemmbacken auf einem Träger, der seinerseits mittels einer horizontal liegenden Schnecke radial zum Biegedom hin bzw. von diesem weg bewegt wird. Diese bekannte Konstruktion ist sehr aufwendig, groß und relativ teuer, und es werden zur Betätigung wieder drei unterschiedliche Antriebe benötigt.

Bei der Biegemaschine aus der EP 1 396 294 A1 sitzen die Klemmbacken auf Führungsbahnen, auf denen sie über einen Spindelantrieb radial bewegt werden. Im Biegearm sind Antrieb und Spindel integriert. Hierdurch ergibt sich allerdings der Nachteil eines sehr schweren und aufwendigen Biegearmes.

In der WO 2007122346 A1 ist eine Biegewerkzeug-Anordnung beschrieben, bei der auf einer ersten Drehscheibe exzentrisch zu deren Biegeachse eine zweite Drehscheibe sitzt. Auf.dieser ist ebenfalls exzentrisch ein Klemmbacken drehbar angebracht. Durch eine entsprechende Steuerung der drei Drehbewegungen und deren Überlagerung können die Zustellbewegung des Klemmbackens und die Biegebewegung ausgeführt werden. Allerdings sind hier eine große Basisdrehscheibe mit einer großen Störkontur und wieder drei Antriebe erforderlich und der gesteuerte Antrieb der verschiedenen Drehachsen ist sehr aufwendig.

Aus der GB 1 319 581 A ist schließlich ein Rotationsbiegewerkzeug der eingangs genannten Art bekannt, bei dem der Biegedom frei verdrehbar auf seiner Drehachse sitzt. Der in einer Ausnehmung einer weiteren Drehplatte kulissenartig in Spannrichtung bzw. Freigaberichtung verschieblich geführte Klemmbacken ist über einen an seiner Schwenkachse angelenkten Schwenkhebel mit einer ebenfalls exzentrisch zur Drehachse des Biegedoms liegenden Schwenkachse auf einer angetriebenen, zum Biegedom konzentrischen Drehscheibe gelenkig verbunden. Durch Verdrehen der Drehscheibe relativ zum Biegedom kann ein zu biegendes Werkstück zwischen Klemmbacken und Biegedorn eingespannt und anschließend durch weiteres Verdrehen der Drehscheibe zusammen mit dem Biegedorn um diesen herum gebogen werden. Mittels einer gegenläufigen Drehung der Drehscheibe kann nach erfolgtem Biegen der Klemmbacken vom Biegedom abgefahren und das Werkstück wieder freigegeben werden. Hierbei muß infolge der nur einen angetriebenen Drehachse diese so lange durch Betätigung des Antriebs, der auch für das Biegen zuständig ist, gedreht werden, bis die Zustellbewegung des Klemmbackens erfolgt und das Werkstück am Biegedorn verklemmt ist. Erst hiernach wird gebogen. Dabei muß der Biegedom vollständig rund ausgeführt sein. Ein Rechts- und ein Linksbiegen ist nicht ohne weiteres möglich. Da die Führung des Klemmbackens über seinen gesamten Verstellweg hinweg in einer Kulissenausnehmung einer Drehplatte erfolgt, ist hierfür eine große Drehplatte mit einer großen Störkontur hinsichtlich einer Einschränkung des Biegefreiraums erforderlich.

Der Erfindung liegt die Aufgabe zugrunde, ein Rotationszugbiegewerkzeug der einleitend genannten Art vorzuschlagen, das kompakt baut, neben einer kompakten Ausführung der Klemmeinheit auch insgesamt einen kompakten Biegekopf bietet, für Links- wie Rechtsbiegen geeignet ist und nur eine sehr geringe Störkontur im Hinblick auf den Biegefreiraum aufweist.

Erfindungsgemäß wird dies bei einem Rotationszugbiegewerkzeug der einleitend genannten Art dadurch erreicht, daß die Schwenkachse des Klemmbackens auf einer relativ zum Biegedom verdrehbaren, zu diesem konzentrischen Drehscheibe sitzt, wobei der Biegedom über ein hohlzylindrisches Zwischenelement mit einer Grundplatte verbunden und die Drehscheibe konzentrisch in dieser angebracht ist.

Bei dem erfindungsgemäßen Rotationszugbiegewerkzeug wird infolge der freien Verschwenkbarkeit des Klemmbackens um seine Schwenkachse und der Ausführung der Zustellbewegung des Klemmbackens von seiner Klemmstellung in die Offenstellung bzw. umgekehrt allein durch Verdrehen der Drehscheibe relativ zum Biegedom erreicht, daß zur Betätigung des ganzen Biegewerkzeugs nur zwei voneinander unabhängige Drehantriebe eingesetzt werden müssen und der bei vorbekannten Biegewerkzeugen zusätzlich eingesetzte dritte Antrieb vollkommen entfallen kann.

Besonders vorteilhaft ist es ferner, daß bei dem erfindungsgemäßen Rotationszugbiegewerkzeug der Biegedorn über ein hohlzyfindrisch ausgeführtes Zwischenstück mit einer kreisförmigen Grundplatte verbunden und in dieser die Drehscheibe konzentrisch zu deren Drehachse angebracht ist.

Alle diese Maßnahmen tragen zu einer besonders kompakten Bauweise des erfindungsgemäßen Rotationszugbiegewerkzeuges bei, so daß auch der ganze Biegekopf sehr kompakt und mit relativ wenig Aufwand ausführbar ist. Das erfindungsgemäße Rotationszugbiegewerkzeug hat zudem einen sehr großen Biegefreiraum.

Eine vorzugsweise Ausgestaltung der Erfindung besteht darin, daß die Drehscheibe an einer zylindrischen Welle befestigt ist, die sich durch die Grundplatte hindurch erstreckt und sich auf der dem Biegedom abgewandten Unterseite der Grundplatte an dieser mittels eines radial überstehenden Flansches gleitend abstützt. Durch dieses Ineinanderanordnen von Grundplatte und zylindrischer Welle wird erneut eine besonders kompakte Gesamtform dieses Rotationszugbiegewerkzeuges begünstigt.

Von Vorteil ist es ferner, wenn der Biegedom des erfindungsgemäßen Rotationszugbiegewerkzeuges an diesem lösbar angebracht ist, indem er z. B. lösbar mit dem Zwischenelement oder, falls ein solches nicht vorhanden sein sollte, lösbar mit der Grundplatte verbunden ist.

Gleichermaßen vorteilhaft ist es, wenn der Klemmbacken auswechselbar in der Gesamtanordnung vorgesehen ist.

Das gleitende Abstützen der zylindrischen Welle an der Unterseite der Grundplatte kann vorteilhafterweise durch einen radial überstehenden Stützbereich an der zylindrischen Welle oder auch durch mehrere in Umfangsrichtung zueinander versetzte, radial überstehende Bereiche erreicht werden, über den bzw. die die gewünschte gleitende Abstützung durchführbar ist.

Eine besonders vorteilhafte Ausgestaltung der Erfindung besteht auch darin, daß die Drehscheibe über einen auf ihr sitzenden, über eine axiale Länge sich erstreckenden, radial ausgerichteten Verbindungssteg eine weitere, zu ihr konzentrische Drehscheibe trägt, die im hohlzylindrischen Zwischenelement in dessen der Grundplatte axial abgewandtem Endabschnitt, der sich axial an den auf seinem Ende sitzenden Drehdorn anschließt, drehbar gelagert ist. Auch hierdurch wird wieder eine ganz besonders kompakte Ausgestaltung des erfindungsgemäßen Rotationszugbiegewerkzeuges sichergestellt.

Vorteilhaft ist es ferner, wenn die Wand des hohlzylindrischen Zwischenelementes im Bereich zwischen den beiden Drehscheiben über die axiale Länge des Verbindungssteges hinweg zur Ausbildung eines Fensters aufgeschnitten ist, wobei der Klemmbacken auf der axialen Höhe des Drehdornes an einem zur Mittelachse des Zwischenelementes parallelen Schenkel eines L-förmigen Hebels befestigt ist, dessen anderer Schenkel senkrecht zur Mittelachse des Zwischenelementes verläuft und in das Fenster desselben hineinragt, wobei er dort mit seinem freien Endbereich auf einer an ihren axialen Enden an-den beiden Drehscheiben befestigten, zur Mittelachse des Zwischenelementes parallelen Schwenkachse frei verschwenkbar gelagert ist. Durch diese Ausgestaltung läßt sich erneut eine Bauweise erreichen, die in ganz besonderem Maße kompakt baut.

Vorteilhafterweise soll sich dabei das Fenster des Zwischenelementes in Umfangsrichtung so weit erstrecken, daß der L-förmige Hebel, an dem die Klemmbacke befestigt ist, zwei zueinander genau entgegengesetzte Stellungen einnehmen kann, wodurch das erfindungsgemäße Rotationszugbiegewerkzeug sowohl für Rechts-, wie auch für Linksbiegen einsetzbar ist.

In vorteilhafter Weiterbildung der Erfindung wird ferner vorgesehen, daß auf der Grundplatte den beiden zueinander entgegengesetzten Stellungen des L-förmigen Hebels zugeordnete Rasteinrichtungen zum lösbaren Verrasten desselben in jeder dieser beiden Endstellungen angebracht sind. Dabei umfaßt, erneut vorzugsweise, jede Rasteinrichtung einen in der Grundplatte sitzenden, in axialer Richtung vorgespannten Stift, der zum Verrasten in eine auf der zugewandten Unterseite des Schenkels des L-förmigen Hebels angebrachte, in Längsrichtung dieses Hebels verlaufende Rastnut eingreift, wodurch nicht nur eine Verrastung in Umfangsrichtung, sondern auch eine radiale Führung des betreffenden Schenkels des Hebels erfolgen kann.

Besonders bevorzugt wird bei der Erfindung vorgesehen, daß der den Klemmbacken tragende Hebel in seinen beiden zueinander entgegengesetzten Stellungen an seiner einen Seitenfläche gegen eine axial verlaufende Endwand des Fensters anliegt, wodurch sich zusätzlich zur Verrastung auch noch in einer Drehrichtung eine zusätzliche Drehabstützung für den Hebel und damit den Klemmbacken ergibt.

Die Erfindung wird nachfolgend anhand der Zeichnungen im Prinzip beispielshalber noch näher erläutert. Es zeigen:
- Fig. 1: eine perspektivische Schrägansicht des oberen Abschnitts eines erfindungsgemäßen Rotationszugbiegewerkzeuges in voll geöffneter Stellung mit einem eingelegten Rohr;
- Fig. 2: eine Draufsicht auf die Anordnung aus Fig. 1;
- Fig.3: eine Explosionsdarstellung des erfindungsgemäßen Rotationszugbiegewerkzeuges aus Fig. 1 (ohne Gleitschiene);
- Fig. 4: einen Schnitt durch das erfindungsgemäße Rotationszugbiegewerkzeug längs Schnittlinie IV-IV in Fig. 2;
- Fig. 5A: die Anordnung aus Fig. 1, jedoch mit an das zu biegende Rohr herangefahrener Gleitschiene;
- Fig. 5B: eine Draufsicht auf die Anordnung aus Fig. 5A;
- Fig. 5C: die Anordnung aus Fig. 5A, jetzt aber mit der Klemmbacke in ihrer Klemmstellung;
- Fig. 5D: eine Draufsicht auf die Anordnung aus Fig. 5C;
- Fig. 5E: die Anordnung aus Fig. 5C, jedoch nach Ausführung einer Linksbiegung des Rohres um 90°;
- Fig. 5F: eine Draufsicht auf die Anordnung aus Fig. 5E;
- Fig. 6A: eine perspektivische Schrägansicht eines erfindungsgemäßen Rotationszugbiegewerkzeuges mit zugeordneter Gleitschiene, diesmal aber in der voll geöffneten Ausgangsstellung für ein Biegen nach rechts, sowie
- Fig. 6B: eine Draufsicht auf die Anordnung nach Fig. 6A.

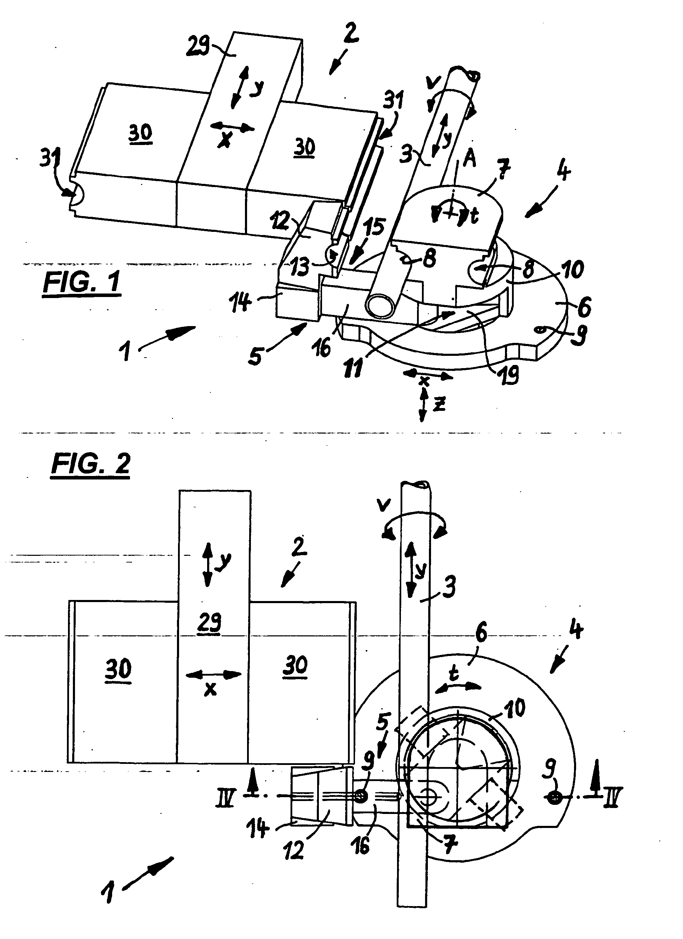

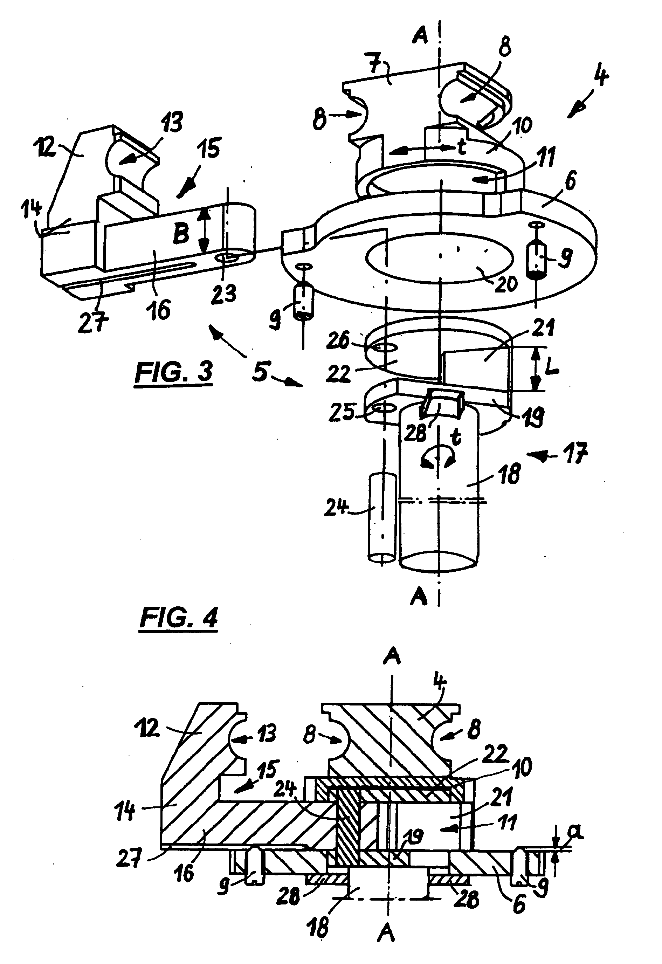

In Fig. 1 ist ein Rotationszugbiegewerkzeug 1 zusammen mit einer Gleitschienenanordnung 2 in schräger Perspektivansicht und in Fig.2 in Draufsicht gezeigt. Fig.3 stellt eine Explosionsdarstellung dieses Biegewerkzeuges, und Fig. 4 einen Schnitt durch die Anordnung von Fig. 2 längs der Schnittlinie IV-IV, dar.

Ein solches Biegewerkzeug dient zum Biegen von länglichen, strangförmigen Werkstücken 3, z. B. zum Biegen von Rohren, von Profilen, von Drähten oder von sonstigen strangförmigen Teilen.

In den Figuren ist, soweit diese ein Werkstück 3 zeigen, dieses in Form eines Rohres (nur beispielshalber) dargestellt.

Das Biegewerkzeug 1 besteht, wie am besten aus den Fig. 1 und 3 ersichtlich ist, im wesentlichen aus einer Biegedomeinheit 4 und einer Klemmeinheit 5 im Zusammenwirken mit der Gleitschienenanordnung 2.

Dabei umfaßt die Biegedomeinheit 4 im wesentlichen eine um eine Achse A drehbare Grundplatte 6 sowie einen darauf angebrachten Biegedom 7, der mit einer über drei seiner Seiten umlaufenden Biegenut 8 versehen ist.

In der Grundplatte 6 sitzen zwei Führungselemente 9, die in Bohrungen angeordnet und federnd in Richtung nach oben hin vorgespannt sind. Dabei ist dafür Sorge getragen, daß sie unter der Wirkung der Vorspannung nur um eine kleine, vorgegebene Höhe a vorstehen (vgl. Schnittdarstellung der Fig. 4), worauf weiter unten noch eingegangen wird. Das Anordnen solcher Führungselemente in Form von z. B. Führungsstiften 9 in entsprechenden Aufnahmebohrungen der Grundplatte 6 einschließlich des Erzielens einer Vorspannung auf solche Stifte ist eine dem Fachmann bekannte Technik, die in den Figuren nicht im einzelnen dargestellt ist. Gezeigt sind dort nur die Führungselemente 9, die in entsprechenden Aufnahmebohrungen der Grundplatte 6 sitzen und nach deren Oberseite hin vorstehen. Durch die Anordnung zweier Führungselemente 9, spiegelsymmetrisch zur Symmetrieachse S des Biegedoms 7 und der Grundplatte 6, wird die Möglichkeit geschaffen, das Biegewerkzeug 1 für Rechts- wie auch für Linksbiegen einsetzen zu können, worauf weiter unten noch eingegangen wird.

Der Biegedom 7 und die Grundplatte 6 sind über ein im wesentlichen hohlzylinddsches Zwischenelement 10 miteinander starr verbunden, in dessen Mantelwand eine Aussparung in Form eines Fensters 11 angebracht, ist.

Der Biegedom 7 ist in den Figuren einstufig ausgeführt, d. h. es ist nur eine umlaufende Biegenut 8 an ihm ausgebildet. Es besteht aber ohne weiteres auch die Möglichkeit, den Biegedom 7 mehrstufig auszuführen, indem mehrere Biegenuten 8, axial übereinander und jeweils z. B. mit einer unterschiedlichen Nutkrümmung versehen, vorgesehen sind.

Der Biegedorn 7 kann auch vorzugsweise lösbar an dem Zwischenelement 10 angebracht sein, um jederzeit ein Auswechseln durch einen anderen Biegedom zu gestatten. Gleichermaßen könnte der Biegedom 7 aber auch unlösbar mit dem Zwischenelement 10 verbunden und dieses seinerseits lösbar und austauschbar an der Grundplatte 6 befestigt sein.

Die Biegedomeinheit 4 mit dem Biegedom 7 ist um die Biegeachse ***A*** nach beiden Drehrichtungen verdrehbar, wie dies in Fig. 1 mit Pfeilen (**t**) dargestellt ist.

Die Klemmeinheit 5 besteht zunächst aus einem Klemmbacken 12 mit einer Formnut 13 (vgl. Fig. 3 und 4). Selbstverständlich könnte auch der Klemmbacken 12 mehrstufig ausgeführt sein, d. h. mehrer Formnuten 13 übereinander aufweisen, die in ihren jeweiligen Formgebungen der Formgebung einer zugehörigen Biegenut 8 bei einem ebenfalls mehrstufig ausgeführten Biegedom 7 entsprechen.

Der Klemmbacken 12 sitzt seinerseits oben auf einem kurzen, zur Drehachse (Mittelachse) ***A*** der Biegedomeinheit 4 parallelen, somit vertikal ausgerichteten Schenkel 14 eines L-förmigen Hebels 15, und- zwar am äußeren Ende eines weiteren Schenkels 16, der senkrecht zur Mittelachse ***A*** des Zwischenelementes 10 bzw. der Biegedomeinheit 4, damit horizontal, verläuft (vgl. Fig. 3 und 4).

Darüber hinaus besteht, wie in Fig. 3 angegeben, die Klemmeinheit 5 auch noch zusätzlich aus einem Kurbelbolzen 17, der ebenfalls um die Mittelachse bzw. Drehachse ***A*** der Beigedomeinheit 4 verdrehbar ist, jedoch unabhängig von der Verdrehung der Biegedomeinheit 4 selbst.

Der Kurbelbolzen 17 weist zunächst einen Wellenabschnitt 18 in Form einer Drehwelle auf, die an ihrem oberen Ende eine im Durchmesser beidseits über sie hinausstehende Drehscheibe 19 ausbildet, die im zusammengebauten Zustand in einer Öffnung 20 der Grundplatte 6 verdrehbar angeordnet ist. Diese Drehplatte 19 kann als eine voll umlaufende, kreisförmige Drehplatte ausgeführt sein. Bei der Ausführung, die in den Figuren dargestellt ist, bildet sie jedoch nur einen streifenförmigen Ausschnitt aus einer solchen kreisförmigen Platte, der eine dem Durchmesser des Wellenabschnittes 18 entsprechende Breite aufweist und einen mittleren Ausschnitt aus einer kreisförmigen Drehscheibe darstellt, wie dies insbesondere aus Fig. 3 gut erkennbar ist.

Die Drehplatte 19 ist über einen auf ihr sitzenden, über eine axiale Länge ***L*** sich erstreckenden Verbindungssteg 21 mit einer an dessen vorstehendem Ende befestigten, koaxial zur Biegeachse ***A*** und parallel zur Drehscheibe 19 angeordneten weiteren, kreisrunden Drehscheibe 22 verbunden, die im montierten Zustand in der Innenöffnung des hohlzylindrischen Zwischenelementes 10 drehbar gelagert ist (Fig. 3 und 4).

Dabei sind die Abmessungen so gewählt, daß im montierten Zustand die Unterseite der weiteren Drehscheibe 22 in derselben Horizontalebene wie die obere Begrenzungsfläche des Fensters 11 liegt (vgL. Darstellung der Fig. 4).

Das Fenster 11 in der Mantelwand des hohlzylindrischen Zwischenelementes 10 ist von einer solchen axialen Höhe gewählt, daß seine untere Begrenzungswand mit der Oberfläche der Grundplatte 6 in einer Ebene liegt.

Der Schenkel 16 des den Klemmbacken 12 tragenden Hebels 15 liegt im zusammengebauten Zustand mit seiner Unterseite auf der Oberseite der Grundplatte 6 gleitend auf und ragt in das Fenster 11 hinein, wobei die Höhe ***B*** dieses Schenkels 16 der axialen Länge ***L*** des Verbindungssteges 21 und damit genau der Höhe des Fensters 11 in Richtung der Mittelachse ***A*** entspricht.

Der in das Fenster 11 hineinragende Endbereich des Schenkels 16 des Hebels 15 ist, wie Fig. 3 zeigt, gerundet (nämlich halbkreisförmig) ausgeführt und weist eine Durchgangsbohrung 23 auf, durch die ein Zylinderbolzen 24 durchgeführt ist, der mit oberhalb und unterhalb des Schenkels 16 vorstehenden Bolzenbereichen jeweils in eine entsprechend in den Drehplatten 19 und 22 angebrachte Öffnung 25 bzw. 26 hineinragt.

Die Anordnung ist so getroffen, daß der auf dem Hebel 15 befestigte Klemmbacken 12 im montierten Zustand (Fig. 4) frei um die vom-Bolzen 24 gebildete, exzentrisch zur Biegeachse ***A*** liegende Achse verdrehbar ist. Dies kann sowohl mit einem in den Drehplatten 19 und 22 starr fixierten Bolzen 24 erreicht werden, um den sich der Hebel 15 mit der Bohrung 23 frei verschwenken kann. Es könnte jedoch auch der Bolzen 24 in der Öffnung 23 des Hebels 15 starr befestigt sein und mit seinen in die Öffnungen 25 und 26 der Drehplatten 19 und 22 hineinragenden Endabschnitten dort jeweils frei verdrehbar gelagert sein.

Der Schenkel 16 des Hebels 15 weist an seiner Unterseite eine in seine Längsrichtung verlaufende Führungsnut 27 auf, in die, wie Fig. 4 zeigt, bei entsprechender Ausrichtung der Drehposition des Hebels 15 und einer entsprechenden relativen Winkelstellung der Drehplatten 19 und 22 relativ zur Grundplatte 6 und dem Zwischenelement 10 einer der beiden federbelasteten Raststifte 9, welche als Führungselemente und Rastelemente dienen, einrasten kann. Ist eines der Führungselemente 9 in die Führungsnut 27 eingerastet und steht mit dieser in Eingriff, wird hierdurch gleichzeitig auch eine Führung des Hebels 15 in radialer Richtung erreicht.

Wie aus den Fig. 3 und 4 weiterhin ersichtlich ist, sind am Wellenabschnitt 18 in einem axialen Abstand von der Unterseite der Drehscheibe 19 entfernt zwei radiale Vorsprünge 28 angebracht, die radial über die Öffnung 20 in der Grundplatte 6 hinausragen und im eingebauten Zustand gegen die Unterseite der Grundplatte 6 gleitend anliegen (siehe Fig. 4).

Der Winkelbereich, über den hinweg sich in Umfangsrichtung des hohlzylindrischen Zwischenelementes 10 das Fenster 11 erstreckt, ist so groß gewählt, daß im montierten Zustand der Schenkel 16 des Hebels 15 in eine Rastposition mit jedem der beiden Führungselementen 9 gebracht werden kann, und zwar so, daß er dabei zwei zueinander entgegengesetzt ausgerichtete, zur Symmetrieachse ***S*** symmetrische verdrehte Rastpositionen einnimmt (vgl. die einander entgegengesetzt ausgerichteten Rastpositionen aus den Fig. 1 bzw. 2 sowie 6A bzw. 6B). Wird in einer solchen Rastposition der Kurbelhebel 17 retativ zur Grundplatte 6 so gedreht, daß der Klemmbacken 12 in seine ganz an den Biegedorn 7 herangefahrene Klemmstellung überführt wird, so wird dann bei einer weiteren, in gleicher Drehrichtung bewirkten Verdrehung des Kurbelhebels 17 eine formschlüssige gemeinsame Verdrehung von Klemmbacken 12 und Biegedorneinheit 4 (in der Klemmstellung des Klemmbackens 12) bewirkt.

Die Gleitschienenanordnung 2 besteht aus einer Aufnahme 29 und zwei Gleitbacken 30, deren jeweils einer nach einer Seite der Aufnahme 29 hin vorsteht. Dabei kann die Aufnahme 29, welche die Gleitbacken 30 trägt, in zwei zueinander senkrechten Richtungen ***x*** sowie ***y*** (vgl. Fig. 1 und 2) verfahren werden, deren eine (***x***) senkrecht zur Mittelachse des angeförderten Werkstücks 3 und deren andere (***y***) parallel zu dieser Mittelachse liegt.

An jedem der beiden Gleitbacken 30 ist an dessen von der Aufnahme 29 abstehendem Endbereich eine Formnut 31 ausgebildet, die sich, wie Fig. 1 zeigt, über die gesamte Länge des betreffenden Gleitbackens in Richtung ***y*** erstreckt und auf derselben Höhe liegt wie die Formnut 13 des Klemmbackens 12 oder auch die Biegenut 8 des Biegedoms 7.

Durch diese Ausgestaltung der Gleitschienenanordnung 2 ist es möglich, diese jeweils mit einem Gleitbacken 30 rechts oder links an das Werkstück 3 anzulegen.

Um eine vollautomatisierte Fertigung von Biegeteilen zu ermöglichen, ist es erforderlich, daß das Biegewerkzeug 1 und das Werkstück 3 relativ zueinander genau positionierbar und orientierbar sein müssen. Hierfür gibt es allerdings unterschiedliche Maschinenausführungen, in denen das Biegewerkzeug 1 grundsätzlich einsetzbar ist.

Üblicherweise kann das Biegewerkzeug 1 nach oben bzw. unten, in Richtung ***z***, also in Richtung der Mittelachse ***A***, angehoben und abgesenkt sowie rechtwinkelig hierzu und zur Längsachse des Werkstücks 3, somit in Richtung ***x***, seitlich verfahren werden. Das Werkstück 3 wird in Richtung ***y*** dem Biegewerkzeug 1 zugeführt und kann um seine eigene Längsachse in Richtung ***v*** verdreht werden (Fig. 1 und 2).

Gleichermaßen ist es jedoch auch bekannt, das Werkstück 3 seitlich (Richtung ***x***) sowie vertikal (Richtung ***z***) zu verfahren sowie das Biegewerkzeug 1 um die Längsachse des Werkstücks 3 zu drehen (Drehrichtung ***v***) und in Richtung ***y*** zu verfahren.

Die Funktionsweise des Biegewerkzeugs 1 ist wie folgt:
In den Fig. 1, 2 sowie 5A bis 5F sind unterschiedliche Stadien beim Biegen eines Werkstücks 3 dargestellt.

Die Fig. 1 und 2 zeigen die Offenstellung, in welcher die Klemmeinheit 5 und die Gleitschienenanordnung 2 eine von der Biegedorneinheit 4 entfernte Stellung eingenommen haben. Dadurch ist es möglich, das Werkstück 3 in die Biegenut 8 des Biegedoms 7 einzulegen.

Diese geöffnete Stellung der Klemmeinheit 5, in welcher der Klemmbacken 12 in seiner vom Drehdorn 7 maximal entfernten Position steht, wird erreicht, indem der Kurbelbolzen 17 so verdreht (***t*** - vgl. Fig. 4) wird, daß die durch den Bolzen 24 festgelegte Verschwenkachse des Klemmbackens 12, in der Draufsicht gesehen, links von der die Biegeachse bildenden Mittelachse ***A*** liegt. Dabei wird der Klemmbacken 12 über die durch Eingriff des einen Führungselementes 9 in die Führungsnut 27 geschaffene Führung radial nach außen verschoben, bis die in den Fig. 1 und 2 dargestellte Endposition (Offenstellung) erreicht ist.

Anschließend wird nach Einlegung des Werkstücks 3 seitlich in die Biegenut 8 des Biegedoms 7 der Schließ-bzw. Klemmvorgang eingeleitet.

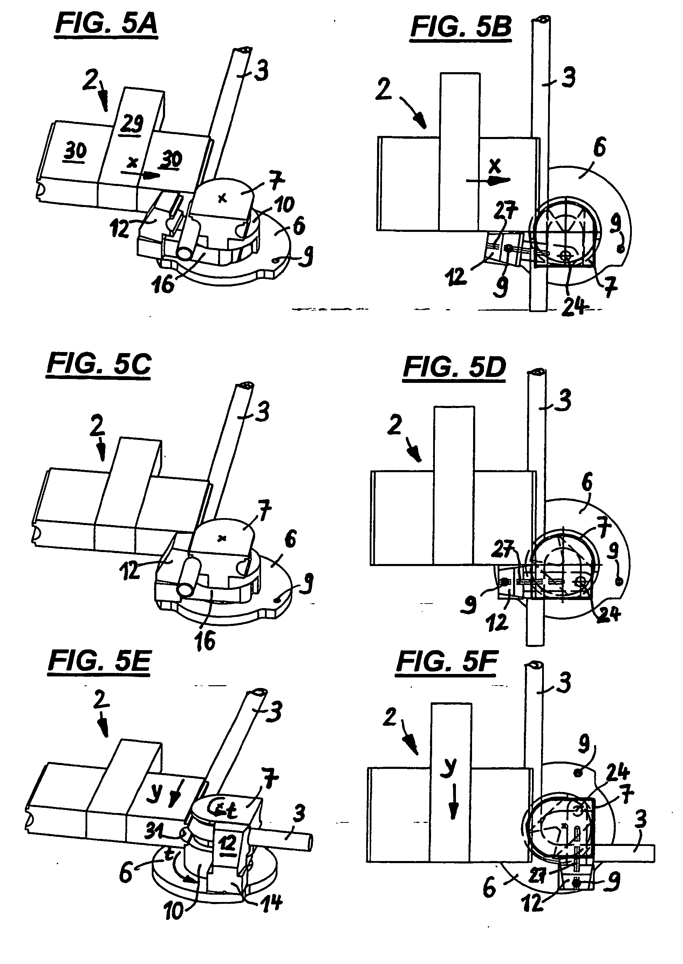

Dabei wird zunächst, wie in Fig. 5A in Perspektivansicht (und in Fig. 5B in der Draufsicht) dargestellt, die Gleitschienenahordnung 2 in Richtung ***x*** seitlich auf das Werkstück 3 hin verfahren und mit ihrer diesem zugewandten Formnut 31 seitlich gegen dieses angelegt. Der Kurbelbolzen 17 wird dann in Drehrichtung ***t*** (in der Draufsicht in Fig. 5B: entgegen dem Uhrzeigersinn) verdreht, wodurch der zur Biegeachse exzentrisch liegende Klemmbacken 12 eine Schwenkbewegung und eine radiale Zustellung auf das Werkstück 3 hin ausführt, wie dies in Abfolge aus den Fig. 5A bzw. 5B und 5C (perspektivische Ansicht) bzw. 5D (Draufsicht auf die Anordnung aus Fig. 5C) ersichtlich ist.

In den Fig. 5C und 5D hat der Klemmbacken 12 seine Klemmstellung erreicht. Der Kurbelbolzen 17 ist in seine in der Draufsicht rechts der Biegeachse ***A*** liegende Endposition verdreht (vgl. insbesondere Fig. 5D). In dieser Stellung liegen die Mittelachsen des Bolzens 24 und der beiden Führungselemente 9 in der Draufsicht auf einer geraden Linie, wobei die Nut 13 des Klemmbackens 12 parallel zur Längsachse des Werkstücks 3 verläuft und letzteres gegen die Biegenut 8 des Biegedoms 7 anklemmt.

Zur Ausführung des eigentlichen Biegevorgangs werden nun die Biegedomeinheit 4 und die Klemmeinheit 5 gemeinsam mit gleicher Geschwindigkeit um die Drehachse ***A*** verschwenkt und dabei das Werkstück 3 um den Biegedorn 7 gebogen. Dabei kann die Gleitschienenanordnung 2 gleichzeitig auch zusätzlich axial in Richtung ***y*** zusammen mit dem Werkstück 3 bewegt werden. Den dabei erreichten Biege-Endzustand zeigen die Fig. 5E (in perspektivischer Ansicht) und die Fig. 5F (in Draufsicht auf die Anordnung aus Fig. 5E).

Durch anschließendes Verdrehen des Kurbelbolzens 17 in der der Biegedrehung entgegengesetzten Drehrichtung wird sodann die Klemmeinheit 5 wieder geöffnet und hiernach die Gleitschienenanordnung 2 in Richtung ***x*** vom Werkstück 3 entfernt. Damit ist dann wieder eine Offenstellung erreicht, in welcher das Werkstück 3 aus dem Biegewerkzeug 1 entnommen werden kann. Anschließend kann z. B. durch Verdrehen (Richtung ***z***) und durch Vorschieben (Richtung ***y***) des Werkstücks 3 eine nächste Biegeposition angefahren werden.

Soll das Biegewerkzeug 1 von seiner in den Fig. 1 bis 5F dargestellten Anordnung zum Linksbiegen auf ein Rechtsbiegen umgesetzt werden wird zunächst in der in den Fig. 1 und 2 gezeigten Stellung die Rastverbindung zwischen dem einen Führungselement 9 (in der Darstellung der Fig. 2: dem linken Führungselement 9) und der Führungsnut 27 des L-förmigen Hebels 15 gelöst. Dazu wird entweder die Gleitschienenanordnung 2 in Richtung ***y*** gegen die Schenkel 14 und 16 des L-förmigen Hebels 15 und den Klemmbacken 12 angefahren und drückt dabei den Klemmbacken 12 aus seiner Verrastung heraus. Stattdessen könnte aber auch der Kurbelbolzen 17 (in der Draufsicht der Fig. 2: im Uhrzeigersinn gesehen) gedreht und hierdurch der Rasteingriff aufgehoben werden.

Beide Möglichkeiten erzeugen eine Drehbewegung des aus dem Klemmbacken 12 und dem L-förmigen Hebels 15 bestehenden Klemmelementes, wobei das aufgebrachte Drehmoment die federnd vorgespannte Rastverbindung zwischen dem jeweiligen Führungselement 9 und der Führungsnut 27 löst.

Im Anschluß hiernach wird die Klemmeinheit 5 zusammen mit der Biegedomeinheit 4 gemeinsam (in der Draufsicht gesehen: wiederum im Uhrzeigersinn) um die Drehachse ***A*** verschwenkt, wonach durch erneutes Verfahren der Gleitschienenanordnung 2 wiederum in Richtung ***y*** die Führungsnut 27 des Klemmelementes mit dem zweiten der beiden Führungselemente 9 in Eingriff gebracht werden kann, wenn die Grundplatte 6 in eine im Vergleich zu ihrer Stellung aus Fig. 2 um 180° verdrehte Stellung überführt wird.

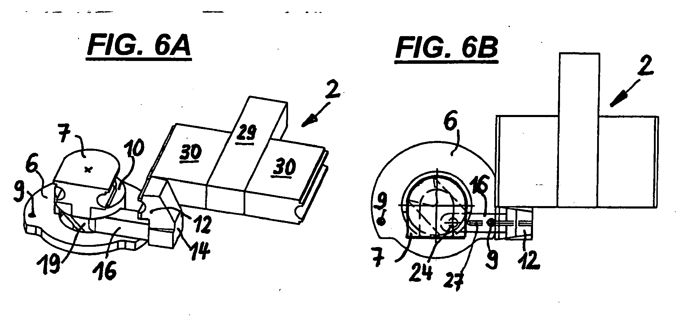

Durch ein dann weiter erfolgendes Verdrehen der Klemmeinheit 5 zusammen mit der Biegedomeinheit 4 um die Drehachse ***A*** und durch ein entsprechendes Verfahren der Gleitschienenanordnung 2 in die Richtungen ***x*** und ***y*** wird schließlich die in den Fig. 6A (Perspektivansicht) sowie 6B (Draufsicht an die Anordnung aus Fig. 6A) dargestellte Einlegestellung zum Rechtsbiegen erreicht, in welcher der den Klemmbacken 12 tragende Hebel 15 eine zu seiner in den Fig. 1 und 2 gezeigten Offenstellung entgegengesetzte Offenstellung einnimmt.

Die zum Verdrehen der Biegedorneinheit 4 und des Kurbelbolzens 17 erforderlichen -Drehantriebe sind in den Figuren der Einfachheit halber nicht dargestellt.

Die in den Figuren dargestellte Ausführung eines Rotationszugbiegewerkzeugs führt zur Realisierung einer kompakten Klemmeinheit und damit auch eines insgesamt kompakten Biegekopfes, der für Links und Rechtsbiegen geeignet ist und bei dem gegenüber den bei bekannten Rotationszugbiegewerkzeugen jeweils eingesetzten Drehantrieben eine Antriebsachse eingespart ist.

Der kompakte Aufbau des beschriebenen Rotationszugbiegewerkzeugs weist auch eine nur sehr kleine Störkontur auf mit einer entsprechend nur sehr kleinen Einschränkung des Biegefreiraums.

## Patentansprüche

1. Rotationszugbiegewerkzeug (1) mit Exzenterklemmung zum Biegen länglicher Werkstücke (3), wie Rohre, Drähte, Profilstränge oder dgl., mit einem verdrehbaren Biegedorn (7), einem diesem zugeordneten und relativ zu ihm beweglichen Klemmbacken (12), der von einer von jenem entfernten Offenstellung, in der ein zu biegendes Werkstück (3) zwischen Biegedom (7) und Klemmbacken (12) einführbar ist, in eine Klemmstellung am Biegedom (7) bzw. umgekehrt verbringbar und dabei um eine zur Drehachse (A) des Biegedoms (7) exzentrisch versetzte Schwenkachse (24) frei verdrehbar ist, wobei der Klemmbacken (12) zwischen seiner Klemmstellung und seiner Offenstellung durch Verdrehen der Drehscheibe (19) relativ zum Biegedorn (7) verfahrbar ist, ***dadurch gekennzeichnet,* daß** die Schwenkachse (24) des Klemmbackens (12) auf einer relativ zum Biegedom (7) verdrehbaren und zu diesem konzentrischen Drehscheibe (19) sitzt, wobei der Biegedom (7) über ein hohlzylindrisches Zwischenelement (10) mit einer Grundplatte (6) verbunden und die Drehscheibe (19) konzentrisch in dieser angebracht ist.

2. Rotationszugbiegewerkzeug nach Anspruch 1 **dadurch gekennzeichnet, daß** der Biegedorn (7) lösbar mit dem Zwischenelement (10) verbunden ist.

3. Rotationszugbiegewerkzeug nach Anspruch 1 oder 2, **dadurch gekennzeichnet, daß** die Drehscheibe (19) auf einer zylindrischen Welle (18) befestigt ist, die in der Grundplatte (6) gelagert ist und sich auf der dem Biegedom (7) abgewandten Unterseite der Grundplatte (6) gleitend an dieser axial abstützt.

4. Rotationszugbiegewerkzeug nach Anspruch 3, **dadurch gekennzeichnet, daß** die zylindrische Welle (18) zum gleitenden Abstützen an der Unterseite der Grundplatte (6) einen radial überstehenden Stützbereich oder mehrere, in Umfangsrichtung zueinander versetzte, radial überstehende Bereiche (28) aufweist.

5. Rotationszugbiegewerkzeug nach Anspruch 3 oder 4, **dadurch gekennzeichnet, daß** die Drehscheibe (19) über einen auf ihr sitzenden, über eine axiale Länge (L) sich erstreckenden, radial verlaufenden Verbindungssteg (21) eine zu ihr konzentrische, weitere Drehscheibe (22) trägt, die im hohlzylindrischen Zwischenelement (10) in dessen der Grundplatte (6) axial abgewandtem Endabschnitt drehbar gelagert ist.

6. Rotationszugbiegewerkzeug nach Anspruch 5, **dadurch gekennzeichnet, daß** die Wand des hohlzylindrischen Zwischenelementes (10) im Bereich zwischen den beiden Drehscheiben (19, 22) der zylindrischen Welle (18) über die axiale Länge (L) des Verbindungssteges (21) hinweg zur Ausbildung eines Fensters (11) aufgeschnitten ist, wobei der Klemmbacken (12) auf der axialen Höhe des Drehdomes (7) an einem zur Mittelachse (A) des Zwischenelementes (10) parallelen Schenkel (14) eines L-förmigen Hebels (15) befestigt ist, dessen anderer Schenkel (16) senkrecht zur Mittelachse (A) des Zwischenelementes (10) verläuft und in das Fenster (11) desselben hineinragt, wobei er dort mit seinem freien Endbereich auf einer an ihren axialen Enden an den beiden Drehscheiben (19, 22) befestigten, zur Mittelachse (A) des Zwischenelementes (10) exzentrischen und zu dieser parallelen Schwenkachse (24) frei verschwenkbar gelagert ist.

7. Rotationszugbiegewerkzeug nach Anspruch 6, **dadurch gekennzeichnet, daß** das Fenster (11) des Zwischenelementes (10) sich in Umfangsrichtung so weit-erstreckt, daß der L-förmige Hebel (15) darin zwei zueinander entgegengesetzte zur Symmetrieachse S des Biegedornes 7 symmetrische Stellungen einnehmen kann.

8. Rotationszugbiegewerkzeug nach Anspruch 7, **dadurch gekennzeichnet, daß** auf der Grundplatte (6) den beiden zueinander entgegengesetzte Stellungen des L-förmigen Hebels (15) zugeordnete Rasteinrichtungen (9) zum lösbaren Verrasten desselben in jeder der beiden Stellungen angebracht sind.

9. Rotationszugbiegewerkzeug nach Anspruch 8, **dadurch gekennzeichnet, daß** jede Rasteinrichtung einen in der Grundplatte (6) sitzenden, in axialer Richtung vorgespannten Führungsstift (9) umfaßt, der zum Verrasten in eine auf der zugewandten Unterseite des Schenkels (16) des L-förmigen Hebels (15) angebrachte, in Längsrichtung dieses Schenkels (16) gerichtete Rastnut (27) eingreift.

10. Rotationszugbiegewerkzeug nach einem der Ansprüche 7 bis 9, **dadurch gekennzeichnet, daß** der den Klemmbacken (12) tragende Hebel (15) in seinen beiden zueinander entgegengesetzten Stellungen an seiner einen Seitenfläche gegen eine axial verlaufende Endwand des Fensters (11) anliegt.

11. Rotationszugbiegewerkzeug nach einem der Ansprüche 1 bis 10, **dadurch gekennzeichnet, daß** der Klemmbacken (12) auswechselbar ist.

## Claims

1. Rotation stretch bending tool (1) with eccentric clamp to bend linear workpieces (3) such as pipes, wires, profile extrusions or similar, with a rotatable bending mandrel (7), a clamping jaw (12) allocated thereto and mobile in relation thereto which can be moved from an open position remote therefrom, in which a workpiece (3) to be bent can be inserted between the bending mandrel (7) and the clamping jaw (12), into a clamping position on the bending mandrel (7) or conversely, and is freely rotatable about a swivel axis (24) offset eccentrically in relation to the rotation axis (A) of the bending mandrel (7), wherein the clamping jaw (12) can be moved between its clamping position and its open position by twisting the turntable (19) relative to the bending mandrel (7), **characterised in that** the swivel axis (24) of the clamping jaw (12) sits on a turntable (19) concentric to and rotatable relative to the bending mandrel (7), wherein the bending mandrel (7) is connected with a base plate (6) via a hollow cylindrical intermediate element (10) and the turntable (19) is held concentrically therein.

2. Rotation stretch bending tool according to claim 1, **characterised in that** the bending mandrel (7) is connected detachably with the intermediate element (10).

3. Rotation stretch bending tool according to claim 1 or 2, **characterised in that** the turntable (19) is attached on a cylindrical shaft (18) which is mounted in the base plate (6) and which rests sliding axially on the underside of the base plate (6) facing away from the bending mandrel (7).

4. Rotation stretch bending tool according to claim 3, **characterised in that** for sliding support on the underside of the base plate (6), the cylindrical shaft (18) has a radially protruding supporting region or several radially protruding regions (28) arranged offset to each other in the peripheral direction.

5. Rotation stretch bending tool according to claims 3 or 4, **characterised in that** the turntable (19) carries via a radial connecting web (21) sitting thereon and extending over an axial length (L), a further turntable (22) concentric thereto which is mounted rotatably in the hollow cylindrical intermediate element (10) in its end section facing axially away from the base plate (6).

6. Rotation stretch bending tool according to claim 5, **characterised in that** the wall of the hollow cylindrical intermediate element (10) in the region between the two turntables (19, 22) of the cylindrical shaft (18) is cut open over the axial length (L) of the connecting web (21) to form a window (11), wherein the clamping jaw (12) is attached at the axial height of the rotating mandrel (7) on one leg (14) of an L-shaped lever (15), which leg runs parallel to the central axis (A) of the intermediate element (10), the other leg (16) of which lever runs vertical to the central axis (A) of the intermediate element (10) and protrudes into the window (11) thereof, wherein with its free end region it is mounted freely rotatable on a swivel axis (24) attached at its axial ends on the two turntables (19, 22) and running eccentric and parallel to the centre axis (A) of the intermediate element (10).

7. Rotation stretch bending tool according to claim 6, **characterised in that** the window (11) of the intermediate element (10) extends so far in the peripheral direction that in this the L-shaped lever (15) can assume two positions opposite each other and symmetrical to the axis of symmetry (S) of the bending mandrel (7).

8. Rotation stretch bending tool according to claim 7, **characterised in that** on the base plate (6) are arranged locking devices (9) allocated to the two opposite positions of the L-shaped lever (15), for releasable locking thereof in each of the two positions.

9. Rotation stretch bending tool according to claim 8, **characterised in that** each locking device comprises a guide pin (9) sitting in the base plate (6) and preclamped in the axial direction which for locking engages in an engagement groove (27) arranged on the facing underside of the leg (16) of the L-shaped lever (15) and oriented in the longitudinal direction of this leg (16).

10. Rotation stretch bending tool according to any of claims 7 to 9, **characterised in that** in its two opposing positions, the lever (15) carrying the clamping jaw (12) lies at its one side face against an axial end wall of the window (11).

11. Rotation stretch bending tool according to any of claims 1 to 10, **characterised in that** the clamping jaw (12) is interchangeable.

## Revendications

1. Cintreuse (1) comprenant un serrage excentrique pour le pliage de pièces (3) longitudinales, tels que les tubes, les câbles, les profilés extrudés ou similaires, et comprenant un mandrin de pliage (7) mobile en rotation, une mâchoire de serrage (12) associée à celui-ci et pivotant relativement à ce dernier qui est apte à être déplacée à partir d'une position ouverte éloignée de ce dernier, dans laquelle une pièce à usiner (3) est apte à être insérée entre le mandrin de pliage (7) et la mâchoire de serrage (12), vers une position de serrage sur le mandrin de pliage (7) voire vice versa, tout en étant apte à tourner librement autour d'un axe de pivotement (24) déporté excentrique par rapport à l'axe de pivotement (A) du mandrin de pliage (7), la mâchoire de serrage (12) étant apte à être déplacée entre sa position de serrage et sa position ouverte par une rotation du disque de rotation (19) relativement au mandrin de pliage (7), ***caractérisé en ce que*** l'axe de pivotement (24) de la mâchoire de serrage (12) est monté sur une plaque tournante (19) concentrique relativement au mandrin de pliage (7) et apte à être pivotée par rapport à ce dernier, le mandrin de pliage (7) étant relié à une plaque de base (6) via un élément intermédiaire (10) cylindrique creux et la plaque tournante (19) étant montée de manière concentrique dans celle-ci.

2. Cintreuse selon la revendication 1, **caractérisé en ce que** le mandrin de pliage (7) est relié avec l'élément intermédiaire (10) de manière amovible.

3. Cintreuse selon la revendication 1 ou 2, **caractérisé en ce que** la plaque tournante (19) est montée sur un arbre cylindrique (18) qui tourne dans la plaque de base (6) et prend appui axialement et de manière glissante sur la face inférieure de la plaque de base (6) en opposition relativement au mandrin de pliage (7).

4. Cintreuse selon la revendication 3, **caractérisé en ce que** l'arbre cylindrique (18) présente, aux fins d'appui glissant sur la face inférieure de la plaque de base (6), une zone de support en saillie radiale ou plusieurs zones (28) en saillie radiale et déportées les unes par rapport aux autres dans le sens périphérique.

5. Cintreuse selon la revendication 3 ou 4, **caractérisé en ce que** la plaque tournante (19) porte, montée sur cette dernière, sur une entretoise (21) s'étendant de manière radiale sur une longueur axiale (L), une autre plaque tournante (22) concentrique par rapport à cette dernière et qui pivote dans l'élément intermédiaire (10) cylindrique creux dans la section d'extrémité en opposition axialement de la plaque de base (6).

6. Cintreuse selon la revendication 5, **caractérisé en ce que** la paroi de l'élément intermédiaire (10) cylindrique creux est ouverte dans la zone entre les deux plaques tournantes (19, 22) de l'arbre cylindrique (18) sur la longueur axiale (L) de l'entretoise (21) afin de former une fenêtre (11), la mâchoire de serrage (12) étant fixée à la hauteur axiale du dôme de rotation (7) à une branche (14) d'un levier (15) en L parallèle à l'axe central (A) de l'élément intermédiaire (10) et dont l'autre branche (16) s'étend perpendiculairement à l'axe central (A) de l'élément intermédiaire (10) et est en sailli dans la fenêtre (11) de ce dernier, où il tourne librement avec sa section d'extrémité libre sur un axe de pivotement (24) fixé sur une de ses extrémités axiales sur les deux plaques tournantes (19, 22), excentrique relativement à l'axe central (A) de l'élément intermédiaire (10) et parallèle par rapport à celui-ci.

7. Cintreuse selon la revendication 6, **caractérisé en ce que** la fenêtre (11) de l'élément intermédiaire (10) s'étend dans le sens périphérique de manière telle que le levier (15) en L puisse y adopter deux postions en opposition l'une par rapport à l'autre et symétriques relativement à l'axe de symétrie S du mandrin de pliage 7.

8. Cintreuse selon la revendication 7, **caractérisé en ce que** des dispositions de blocage (9) permettant le blocage amovible du levier en L (15) dans chacune des deux positions sont montées sur la plaque de base (6) en deux positions en opposition l'une par rapport à l'autre.

9. Cintreuse selon la revendication 8, **caractérisé en ce que** chacun des dispositifs de blocage comprend une goupille de guidage (9) montée dans la plaque de base (6) et monté dans la direction axiale et qui s'engrène dans une rainure de blocage (17) montée dans la face inférieure et en regard de la branche (16) du levier en L (15) et orientée dans le sens longitudinal de ladite branche (16) afin de s'y bloquer.

10. Cintreuse selon l'une quelconque des revendications 7 à 9, **caractérisé en ce que** le levier (15) portant la mâchoire de serrage (12), dans ses deux positions en opposition l'une par rapport à l'autre, prend appui, pour l'une de ses faces latérales, contre une paroi d'extrémité de la fenêtre (11) s'étendant axialement.

11. Cintreuse selon l'une quelconque des revendications 1 à 10, **caractérisé en ce que** les mâchoires de serrage (12) sont échangeables.
